# FASCICULE DE BREVET EUROPEEN

(11) **EP 1 468 716 B1**
(45) Date de publication et mention de la délivrance du brevet: **29.03.2006**
(21) Numéro de dépôt: 04370009.5
(22) Date de dépôt: 07.04.2004
(51) Int. Cl.: B01D 45/08

(54) **Diffuseur de flux et élément chaudronné équipé d'un tel diffuseur**
Strömungsverteiler und mit diesem ausgestattetes kesselartiges Element
Flow diffusor and boiler-type element equipped therefrom

(30) Priorité: 09.04.2003 FR 0304393
(43) Date de publication de la demande: 20.10.2004
(73) Titulaire: Tissmetal, S.A., 51683 Reims Cédex 2 (FR)
(72) Inventeur: Sicard, Thierry, 51100 Reims (FR); Grislain, Benoit, 51500 Toissy (FR); Vicot, Matthieu, 59130 Lambersart (FR)
(74) Mandataire: Hennion, Jean-Claude

(56) Documents cités:
- EP-A- 0 231 841
- EP-A- 0 552 837
- EP-A- 1 018 360
- WO-A-01/60478

## Description

L'invention se rapporte à un diffuseur de flux.

Elle se rapporte plus particulièrement mais non exclusivement aux diffuseurs de flux mono ou bi-phasiques.

Elle se rapporte également à l'élément chaudronné cylindrique équipé d'un diffuseur.

Notamment, dans la chimie ou la pétrochimie, il est parfois nécessaire d'éliminer, d'un flux de gaz, les gouttes ou les particules que peut transporter ce gaz.

Pour ce faire, celui-ci doit alors traverser un élément de filtration encore appelé dévésiculeur ou matelas éliminateur, destiné à permettre la séparation des particules du flux de gaz.

A cet effet, dans un élément chaudronné globalement cylindrique d'axe vertical ou horizontal, on y positionne le matelas de séparation de sorte que le volume du ballon soit scindé en deux chambres.

Dans une des chambres, on introduit le flux de gaz à traiter qui migre vers la deuxième chambre au travers du matelas séparateur.

Des moyens de récupération du gaz traité ayant traversé le matelas et des particules ou gouttes retenues sont bien évidemment prévus dans chacune des chambres.

De manière connue, la capacité de traitement d'un matelas séparateur dépend notamment de son étendue.

Son efficacité dépend de plusieurs paramètres dont le débit de gaz par unité de surface.

En effet, on conçoit bien qu'au delà d'une certaine valeur de débit, l'efficacité de séparation du matelas séparateur décroît et celui-ci laisse alors circuler du gaz avec des gouttes.

Pour un rendement optimal de l'installation, le gaz qui est introduit dans le ballon latéralement selon une direction radiale, via une conduite, doit au cours de son déplacement ascensionnel se répartir uniformément pour que le débit par unité de surface traversant le matelas reste sous une valeur prédéterminée et/ou dans une fourchette de travail.

On comprend bien que ce gaz chargé provenant d'une conduite d'alimentation de section réduite par rapport à la section du ballon et avec une certaine vitesse ne peut se répartir uniformément sur toute la section du ballon sauf à éloigner démesurément le point d'introduction du gaz du matelas séparateur ou à limiter la vitesse d'introducteur du gaz chargé.

Cela est bien évidemment possible mais il est beaucoup plus avantageux de fabriquer un petit réservoir qu'un grand notamment en raison des impératifs liés par exemple à la pression qui peut régner dans ces réservoirs.

Pour pallier à cet inconvénient, on connaît un diffuseur de flux (WO-A-01/60478) comprenant des lames déflecteurs réparties le long de l'axe d'introduction du gaz, chaque lame comprenant une première partie qui est parallèle à cet axe d'introduction suivie d'une partie médiane courbée se prolongeant par une partie terminale à angle droit de la première partie. Ces lames canalisent le flux de gaz.

Un tel dispositif est relativement compliqué à construire et l'optimisation des paramètres du dispositif est difficile notamment en raison des nombreuses surfaces, des formes de celles-ci et de l'état de surface de ces lames.

L'invention se propose d'apporter une solution aux problèmes notamment évoqués ci-avant.

A cet effet, l'invention a pour objet un diffuseur de flux caractérisé en ce qu'il est constitué de plaques écartées et alignées suivant l'axe d'introduction du flux, chaque plaque comportant une lumière centrée sur l'axe précité, ces lumières étant de surfaces décroissantes dans le sens de progression du flux.

L'invention sera bien comprise à l'aide de la description ci-après faite à titre d'exemple non limitatif en regard du dessin qui représente schématiquement :

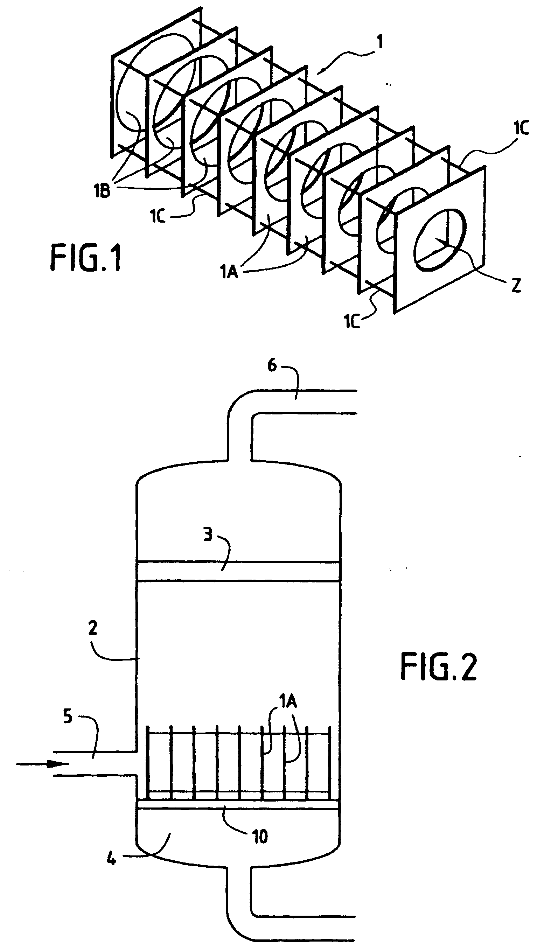

- figure 1 : un diffuseur de flux vu en perspective.
- figure 2 : une installation comprenant un diffuseur de flux vu en coupe verticale,
- figure 3 : une visualisation modélisée des particules sans diffuseur,
- figure 4 : une visualisation modélisée des particules avec le diffuseur selon l'invention.

En se reportant au dessin, on voit une installation comprenant un diffuseur 1 de flux.

Comme on peut le voir, cette installation comprend dans un ballon 2 un élément chaudronné, un moyen 3 de séparation qui doit séparer les gouttes de fluide dispersées dans le gaz qui les transporte.

Le gaz chargé est introduit dans la chambre primaire 4 amené par une conduite 5 d'alimentation.

Le ballon 2 est un cylindre et la conduite 5 d'entrée se trouve à distance de la base du cylindre.

Une conduite 6 de reprise du gaz est reliée à la deuxième chambre située au dessus ou en aval du moyen 3 de séparation.

La conduite d'alimentation débouche radialement et devant cette conduite d'alimentation, le diffuseur est positionné face à cette conduite.

Ce diffuseur de flux est destiné à répartir uniformément le gaz provenant de l'entrée afin d'éviter les passages préférentiels et notamment de répartir uniformément le profil des vitesses de gaz attaquant le moyen de séparation.

Il est constitué de plaques 1A écartées et alignées suivant l'axe Z d'introduction du flux, chaque plaque 1A comportant une lumière 1B centrée sur l'axe précité, ces lumières étant de surfaces décroissantes dans le sens de progression du flux.

Les plaques sont éventuellement carrées et chaque lumière est circulaire.

La section circulaire est bien évidemment intéressante.

Des entretoises 1C maintiennent les plaques 1A à l'écartement souhaité.

La première plaque est écartée de la paroi interne du ballon.

Avec ce système, l'enveloppe externe du flux de gaz qui arrive avec une certaine vitesse va venir heurter les bords de lumières de sorte que, progressivement, une partie du flux va être déviée dans un plan perpendiculaire à l'axe d'introduction.

On va donc progressivement dévier sur 360° une partie du flux qui va créer des tourbillons.

Le nombre de plaques, l'écartement de celles-ci et la taille des lumières 1A dépendent du débit, de la dimension de la conduite, du diamètre du cylindre ainsi que d'autres paramètres.

A titre d'indication, pour un cylindre d'un diamètre de quatre mille six cents millimètres et un diamètre de la conduite d'entrée de mille deux cents millimètres, on utilise un diffuseur à sept plaques, l'orifice de la plaque la plus proche de l'entrée ayant un diamètre de mille cent quarante millimètres, pour la quatrième plaque un diamètre de huit cent quatorze millimètres et pour la dernière plaque un diamètre de quatre cent quatre vingt huit millimètres.

Le dispositif est donc soit maintenu par ses deux extrémités au moyen de pièces de liaison fixées dans le prolongement des entretoises, soit supporté par une ou deux traverses 10.

Ces traverses ne modifient que très peu l'écoulement du gaz chargé en particules.

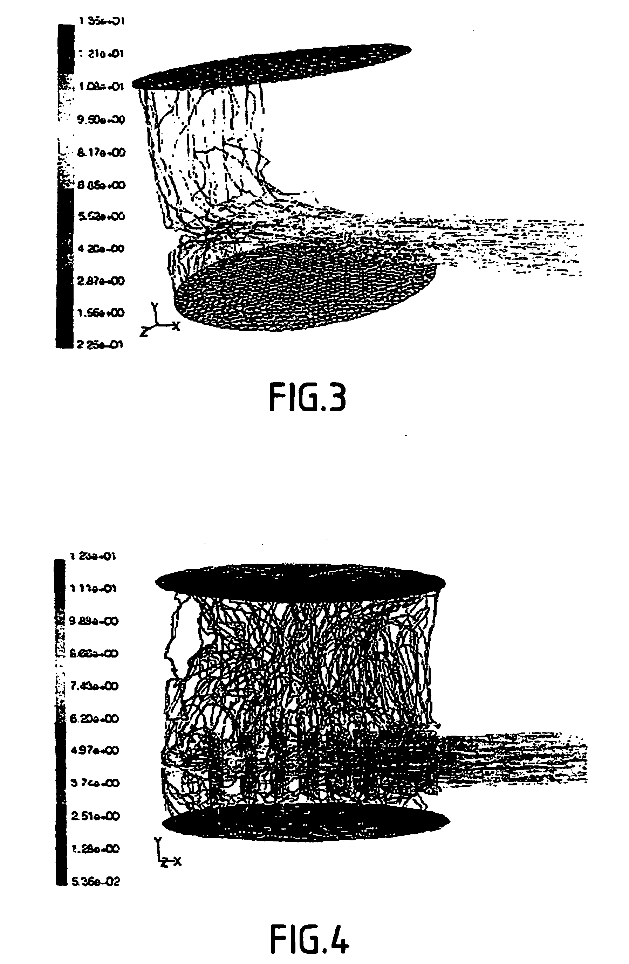

En figure 4, on a représenté en coupe verticale à gauche la modélisation de la répartition du flux avec un diffuseur selon l'invention.

La figure 3 montre la répartition des particules dans un ballon avec séparateur sans diffuseur.

On constate que les particules de 100µm viennent frapper la paroi opposée à l'entrée ce qui établit une concentration du côté de la paroi opposée.

On a établi que la recirculation des particules induit des zones hétérogènes dont la plage de vitesse est incluse dans l'intervalle (0,07-1,35)m/s.

Se posent donc des problèmes.

On va décrire le diffuseur selon l'invention.

On constate qu'il existe une meilleure répartition des particules dans l'espace.

On constate que les vitesses des particules sont comprises entre 0,38 et 0,66 m/s soit une réduction d'amplitude de 80%.

En conclusion, l'utilisation du diffuseur apporte :
1°) pour l'opération de séparation gaz/liquide :
   - une répartition uniforme des vitesses d'attaque du dévésiculeur,
   - un recentrage de la plage des vitesses convergeant vers la vitesse nominale,
   - l'utilisation de la totalité de la surface du dévésiculeur,
   - la possibilité d'accepter des à-coups dans le process plus importants,
2°) pour les contraintes économiques,
   - un dimensionnement inférieur du diamètre,
   - un dimensionnement inférieur de la distance du ballon entre la conduite d'alimentation et le dévésiculeur.
3°) pour l'environnement :
   - une diminution des vibrations,
   - une diminution du bruit de fonctionnement par l'absence d'impacts sur la paroi opposée.

## Revendications

1. Diffuseur de flux destiné à être maintenu dans un élément chaudronné généralement cylindrique **CARACTERISE en ce qu'**il est constitué de plaques (1A) écartées et alignées suivant l'axe (Z) d'introduction du flux, chaque plaque (1A) comportant une lumière (1B) centrée sur l'axe précité, ces lumières étant de surfaces décroissantes dans le sens de progression du flux.

2. Diffuseur de flux selon la revendication 1 **caractérisé en ce que** chaque lumière est circulaire.

3. Diffuseur de flux selon la revendication 1 **caractérisé en ce que** des entretoises (1C) maintiennent les plaques (1A) à l'écartement souhaité.

4. Elément chaudronné équipé d'un moyen de séparation **caractérisé en ce qu'**il comprend un diffuseur de flux selon l'une quelconque des revendications 1 à 3.

5. Elément chaudronné selon la revendication 4 **caractérisé en ce que** la première plaque est écartée de la paroi interne de l'élément chaudronné.

6. Elément chaudronné selon la revendication 4 **caractérisé en ce que** le diffuseur du flux est maintenu par ses deux extrémités au moyen de pièces de liaison fixées dans le prolongement des entretoises.

7. Elément chaudronné selon la revendication 4 **caractérisé en ce que** le diffuseur de flux est supporté par une ou deux traverses.

## Patentansprüche

1. Stromverteiler, welcher dazu bestimmt ist, in einem allgemein zylinderförmigen, kesselartigen Element gehalten zu werden, **dadurch gekennzeichnet, daß** er aus Platten (1A) besteht, die entlang der Stromeinleitungsachse (Z) beabstandet und ausgerichtet sind, wobei jede Platte (1A) eine Öffnung (1 B) aufweist, welche um die vorgenannte Achse zentriert ist, wobei die Flächen dieser Öffnungen in der Richtung des Fortschreitens des Stromes abnehmend ausgebildet sind.

2. Stromverteiler nach Anspruch 1, **dadurch gekennzeichnet, daß** jede Öffnung kreisförmig ist.

3. Stromverteiler nach Anspruch 1, **dadurch gekennzeichnet, daß** Stege (1C) die Platten (1A) in dem gewünschten Abstand voneinander halten.

4. Kesselartiges Element, das mit einem Abscheidemittel ausgestattet ist, **dadurch gekennzeichnet, daß** es einen Stromverteiler nach irgendeinem der Ansprüche 1 bis 3 aufweist.

5. Kesselartiges Element nach Anspruch 4, **dadurch gekennzeichnet, daß** die erste Platte von der Innenwand des kesselartigen Elements beabstandet ist.

6. Kesselartiges Element nach Anspruch 4, **dadurch gekennzeichnet, daß** der Stromverteiler über seine beiden Enden mit Hilfe von Verbindungsteilen, die in der Verlängerung der Stege befestigt sind, gehalten wird.

7. Kesselartiges Element nach Anspruch 4, **dadurch gekennzeichnet, daß** der Stromverteiler durch eine oder zwei Traverse(n) getragen wird.

## Claims

1. Flow diffuser intended to be kept in a generally cylindrical boiler-type element **characterised in that** it consists of spaced out plates (1A) aligned along the centreline (Z) in which the flow enters, each plate (1A) having a port (1B) centred on the said centreline, the surfaces of these ports decreasing in the direction in which the flow progresses.

2. Flow diffuser according to Claim 1, **characterised in that** each port is circular.

3. Flow diffuser according to Claim 1, **characterised in that** spacers (1C) keep the plates (1A) at the required spacing.

4. Boiler-type element fitted with a means of separation, **characterised in that** it includes a flow diffuser according to any one of the Claims 1 to 3.

5. Boiler-type element according to Claim 4, **characterised in that** the first plate is distanced from the inside wall of the boiler-type unit.

6. Boiler-type element according to Claim 4, **characterised in that** the flow diffuser is held by its two ends by means of connecting parts fixed in the extension of the spacers.

7. Boiler-type element according to Claim 4, **characterised in that** the flow diffuser is supported by one or two cross members.
